# EUROPÄISCHE PATENTANMELDUNG

(11) **EP 0 752 434 A1**
(43) Veröffentlichungstag der Anmeldung: **08.01.1997**
(21) Anmeldenummer: 96110191.2
(22) Anmeldetag: 24.06.1996
(51) Int. Cl.: C08G 18/34, C08G 18/80

(54) **Amid-/Imidgruppen-haltige blockierte Polyisocyanate für Drahtlacke**

(30) Priorität: 05.07.1995 DE 19524437
(71) Anmelder: BAYER AG, 51368 Leverkusen (DE)
(72) Erfinder: Halpaap, Reinhard, Dr., 51519 Odenthal (DE); Schlegel, Hans, 51371 Leverkusen (DE); Mazanek, Jan, Dr., 51061 Köln (DE); Meier-Westhues, Hans-Ulrich, Dr., 51379 Leverkusen (DE)

(57) **Zusammenfassung**

Blockierte Isocyanatgruppen und Amid- und/oder Imidstruktureinheiten aufweisende Lackpolyisocyanate, ein Verfahren zu ihrer Herstellung durch Umsetzung von organischen Polyisocyanaten mit Blockierungsmitteln für Isocyanatgruppen, mindestens zwei Carboxyl- und/oder Carbonsäureanhydridgruppen aufweisenden Verbindungen des Molekulargewichtsbereichs 90 bis 400 und gegebenenfalls organischen Polyhydroxylverbindungen des Molekulargewichtsbereichs 62 bis 3000 und ihre Verwendung in Kombination mit organischen Polyhydroxylverbindungen als Einbrennlack oder zur Herstellung eines Einbrennlacks für beliebige hitzeresistente Substrate oder zur Herstellung von Hydroxylgruppen und gegebenenfalls noch blockierte Isocyanatgruppen aufweisenden Bindemittelkomponenten für Einbrennlacke.

## Beschreibung

Die vorliegende Erfindung betrifft neue Lackpolyisocyanate mit blockierten Isocyanatgruppen, die durch das Vorliegen von Amid- und/oder Imidstrukturelementen gekennzeichnet sind, ein Verfahren zur Herstellung dieser Lackpolyisocyanate sowie ihre Verwendung in Kombination mit organischen Hydroxylverbindungen als Einbrennlack oder zur Herstellung eines Einbrennlacks.

Es ist seit vielen Jahren bekannt, unter Verwendung von Drahtlacken auf Polyurethanbasis mit einer Lackschicht versehene Drähte herzustellen, die bei vergleichsweise niederen Temperaturen von ca. 370 bis 390°C verzinnbar sind. Die Bindemittel der hierbei zum Einsatz gelangenden Drahtlacke basieren auf Kombinationen aus Polyesterpolyolen und Phenol- oder Alkanol-blockierten Polyisocyanaten (DE-AS 1 170 096 oder DE-AS 2 626 175). Eine Verbesserung der Verzinnbarkeit kann durch erhöhten Einbau von Urethangruppen in den Polymerfilm durch Kombination von blockierten Polyisocyanaten mit hydroxyfunktionellen Oligourethanen erreicht werden (DE-OS 1 644 794).

Polyurethan-Drahtlacke auf Basis der genannten Kombinationen finden breite Verwendung zur Herstellung von leicht verzinnbaren, lackierten Kupferdrähten, sie sind jedoch aufgrund ihrer nur mittelmäßigen thermischen Belastbarkeit (Temperaturindex TI nach IEC 172 = 130 bis 155°C, IEC = International Electrotechnical Commission) nicht unbeschränkt einsetzbar. Die Wärmeklassen bzw. Temperaturindizes der Isoliermaterialien für Lackdrähte sind z.B. angegeben in S. Darling, "International Wire Standards-Progress Towards Harmonization" in Proceedings 19 th EEI Conference, Chicago 25. bis 28 Sept. 1989, S. 56.

Es ist auch bekannt, Metalldrähte mit solchen Lackschichten zu versehen, die eine weit bessere thermische Dauerbelastbarkeit (Temperaturindex TI gemäß IEC 172 bei ca. 180°C) aufweisen. Die zur Herstellung derartiger Lackierungen eingesetzten Drahtlacke basieren nicht auf Polyurethanen sondern auf hitzebeständigen Kunststoffen wie z.B. Polyhydantoinen (z.B. FR-PS 1 484 694, DE-PS 2 460 206), Polyamidimiden (z.B. DE-OS 3 544 548, DE-OS 3 714 033, DE-OS 3 817 614) oder Polyesteramidimiden (z.B. US-PS 3 652 471, US-PS 4 997 891, DE-PS 3 249 497). Die mit Drahtlacken auf Basis dieser Kunststoffe lackierten Drähte sind jedoch in keinem Fall unterhalb 400°C verzinnbar. In der obengenannten Veröffentlichung von S. Darling werden zwar Polyesterimide mit einem Temperaturindex TI = 180°C als "solderable" (lötbar, verzinnbar) bezeichnet, allerdings ist diese Verzinnbarkeit nach IEC 851 erst bei Temperaturen oberhalb 400°C gegeben. Die Anforderungen an die diversen Lackdrähttypen sind in IEC 317 beschrieben. Hier findet man z.B. für verzinnbare Polyesterimide mit einem Temperaturindex von 180°C (IEC 317, Teil 23) eine Verzinnungstemperatur von 470°C.

Polyesterimide mit hohem Hydroxylgruppengehalt, in Kombination mit wärmebeständigen blockierten Polyisocyanaten sind bei 370°C verzinnbar, zeigen aber gegenüber den üblichen Polyesterimiden stark abfallende Eigenschaften bezüglich tan δ-Knickpunkt und Erweichungstemperatur. Ähnliche Nachteile weisen auch Amidimid-Polyurethankombinationen auf, die in EP 365 877 beschrieben sind.

Aus EP-B 231 509 sind Carbodiimid- und/oder Uretonimingruppen enthaltende Polyisocyanate sowie ihre Verwendung zur Drahtlackierung bekannt. Diese Polyisocyanate eignen sich je nach Reaktionspartner zur Herstellung verzinnbarer (Bsp. 1 der EP-B 231 509) oder aber hitzebeständiger Lackdrähte (Bsp. 3 der EP-B 231 509).

Bekannt sind auch Lackbindemittel, die Gemische aus ganz speziellen Polyamidimiden auf Basis von Trimellithsäureanhydrid und den speziellen eben genannten blockierten Polyisocyanaten entsprechend EP-B 231 509 darstellen und die laut EP-A 291 699 hochwärmebeständige Filme liefern.

Die Verwendung niedermolekularer Zusätze zu Bindemittelsystemen auf Basis blockierter Isocyanate zur Verbesserung der technologischen Eigenschaften ist ebenfalls bereits bekannt. So werden hitzebeständige Lackdrähte nach EP-A 287 947 auch durch Verwendung ungesättigter Carbonsäuren in Kombination mit Carbodiimid- und/oder Uretonimingruppen enthaltenden Polyisocyanaten erhalten. Ebenfalls zu hitzebeständigen Lackdrähten führt die Verwendung von N,N',N''-Tris-(2-hydroxyethyl)-isocyanurat als Zusatzmittel für Drahtlacke auf Polyurethanbasis (DE-OS 3 133 571).

Zusammenfassend kann daher festgestellt werden, daß die Lehre des vorbekannten Standes der Technik sich darin erschöpft, zur Drähtlackierung entweder solche Drahtlacke einzusetzen, die zu Lackierungen einer hohen Hitzebeständigkeit (Temperaturindex TI ca. 180°C) führen oder aber solche Systeme zu verwenden, die dazu geeignet sind, lackierte Drähte herzustellen, die bei einer vergleichsweise niedrigen Temperatur (ca. 370°C) verzinnbar sind.

Es war daher die der Erfindung zugrundeliegende Aufgabe, ein Beschichtungsmittel für hitzeresistente Substrate, insbesondere zur Drahtlackierung zur Verfügung zu stellen, welches beide Vorteile (hohe Hitzebeständigkeit einerseits und Verzinnbarkeit bei vergleichsweise niederen Temperaturen andererseits) in sich vereint. Drahtlacke, die mit Beschichtungsmitteln der erfindungsgemäßen Art beschichtet sind, sollten insbesondere bei ca. 370°C gemäß IEC 851 verzinnbar sein und andererseits einen Temperaturindex TI nach IEC 172 von mindestens 180°C aufweisen, wobei das übrige Eigenschaftsbild möglichst den bekannten Drahtlacken bzw. mit derartigen Drahtlacken beschichteten Drähten entsprechen sollte.

Diese Aufgabe konnte überraschenderweise mit den nachstehend näher beschriebenen erfindungsgemäßen Lackpolyisocyanaten bzw. mit deren Verwendung in Kombination mit organischen Polyhydroxylverbindungen in Einbrennlacken, insbesondere zur Drähtlackierung gelöst werden.

Gegenstand der Erfindung sind Lackpolyisocyanate mit blockierten Isocyanatgruppen, gekennzeichnet durch das gleichzeitige Vorliegen von
(i) 0,5 - 10 Gew.-% an Amid- und/oder Imidstruktureinheiten (berechnet als ―CO―N〈 , MG = 42),
(ii) 5 - 20 Gew.-% an Isocyanatgruppen (berechnet als -NCO, MG = 42) in mit im Sinne der Isocyanat-Additionsreaktion monofunktionellen Blockierungsmitteln für Isocyanatgruppen blockierter Form und
(iii) 0 - 30 Gew.-% an sonstigen, von den blockierten Isocyanatgruppen verschiedenen, chemisch eingebauten, aus der Umsetzung von Isocyanatgruppen mit Hydroxylgruppen organischer Polyhydroxylverbindungen resultierenden Urethangruppen (berechnet als -NH-CO-O-, MG=59).

Gegenstand der Erfindung ist auch ein Verfahren zur Herstellung dieser Lackpolyisocyanate, welches dadurch gekennzeichnet ist, daß man
a) organische Polyisocyanate mit einer im statistischen Mittel durchschnittlichen NCO-Funktionalität von maximal 2,6 eines einheitlichen oder im statistischen Mittel durchschnittlichen Molekulargewichtsbereichs von 140-500 mit
b) Blockierungsmitteln für Isocyanatgruppen,
c) mindestens zwei Carboxyl- und/oder Carbonsäureanhydridgruppen aufweisenden Verbindungen des Molekulargewichtsbereichs 90 - 400 und gegebenenfalls
d) organischen Polyhydroxylverbindungen des Molekulargewichtsbereichs 62-3000 umsetzt,
wobei die Menge des Blockierungsmittels b) in einer zur Blockierung von 20-95 % der Isocyanatgruppen der Komponente a) ausreichenden Menge und die Komponenten c) und gegebenenfalls d) in einer solchen Menge eingesetzt werden, die einem Äquivalentverhältnis von nach der Blockierungsreaktion noch vorliegenden freien Isocyanatgruppen zur Summe aus Carboxyl-, Carbonsäureanhydrid- und Hydroxylgruppen von 0,5:1 bis 1,05:1 entspricht, wobei das Äquivalentverhältnis der Summe aus Carboxyl- und Carbonsäureanhydridgruppen der Komponente c) zu Hydroxylgruppen der Komponente d) bei 1:0 bis 1:20 liegt.

Gegenstand der Erfindung ist auch die Verwendung der Lackpolyisocyanate in Kombination mit organischen Polyhydroxylverbindungen unter Einhaltung eines Äquivalent-Verhältnisses von (i) blockierten Isocyanantgruppen der Lackpolyisocyanate zu (ii) der Summe aus in den Lackpolyisocyanaten gegebenenfalls vorhandenen Hydroxylgruppen und den Hydroxylgruppen der zugesetzten Polyhydroxylverbindungen von 2:1 bis 1:1,2 als Einbrennlack oder zur Herstellung eines Einbrennlacks für beliebige hitzeresistente Substrate, insbesondere zur Drähtlackierung (= 1. erfindungsgemäße Verwendung).

Gegenstand der Erfindung ist auch die Verwendung der Lackpolyisocyanate zur Herstellung von freie Hydroxylgruppen und gegebenenfalls blockierte Isocyanatgruppen aufweisenden Bindemitteln oder Bindemittelkomponenten durch Umsetzung und/oder Abmischung mit organischen Polyhydroxylverbindungen e) in einem Äquivalentverhältnis von (i) blockierten Isocyanatgruppen der Lackpolyisocyanate zu (ii) der Summe aus Hydroxylgruppen der Komponente e) und gegebenenfalls in den Lackpolyisocyanaten bereits vorhandenen Hydroxylgruppen von 1:1,21 bis 1:3, wobei als Polyhydroxylverbindungen e) solche des Molekulargewichtsbereichs 62 bis 350 verwendet werden, die der Komponente d) entsprechen oder von dieser verschieden sind (= 2. erfindungsgemäße Verwendung).

Alle Angaben bezüglich des Molekulargewichts der Komponente a) beziehen sich auf das aus NCO-Gehalt und (mittlerer) NCO-Funktionalität berechenbare (mittlere) Molekulargewicht. Alle Angaben bezüglich des Molekulargewichts der Komponente d), insbesondere der höhermolekularen Polyhydroxylverbindungen d), beziehen sich auf das aus Hydroxylgruppengehalt und (mittlerer) Hydroxylfunktionalität berechenbare (mittlere) Molekulargewicht.

Bei der Durchführung des erfindungsgemäßen Verfahrens zur Herstellung der neuen Lackpolyisocyanate mit blockierten Isocyanatgruppen werden einfache Ausgangspolyisocyanate a) mit Blockierungsmitteln b), polyfunktionellen Carboxyl- und/oder Carbonsäureanhydridverbindungen c) und gegebenenfalls organischen Polyhydroxylverbindungen d) im Sinne einer Isocyanat-Polyadditionsreaktion umgesetzt. Unter dem Begriff "Isocyanat-Polyadditionsreaktion" ist dabei auch die Addition von Isocyanatgruppen an Carboxylgruppen sowie die Addition von Isocyanatgruppen an Carbonsäureanhydridgruppen zu verstehen, die unter Eliminierung von CO₂ zu Amid- bzw. Imidstrukturelementen führen. "Blockierte Isocyanatgruppen" entstehen definitionsgemäß bei der Reaktion mit den gegenüber Isocyanatgruppen monofunktionellen Blockierungsmitteln b), während der unter (iii) benutzte Begriff "Urethangruppen" ausschließlich die durch Reaktion mit Hydroxylgruppen organischer Polyhydroxylverbindungen d) gebildeten Urethangruppen umfaßt.

Die Menge der Blockierungsmittel b) wird bei dem erfindungsgemäßen Verfahren so bemessen, daß sie zur Blockierung von 20 - 95 %, vorzugsweise 35 - 90 % und besonders bevorzugt 50 - 85 % der Isocyanatgruppen der Ausgangspolyisocyanate a) ausreicht. Die Mengen der Komponenten c) und d) werden so bemessen, daß das Äquivalentverhältnis der gegenüber den Blockierungsmitteln b) überschüssigen Isocyanatgruppen der Komponente a) zu der Summe aus Carboxyl-, Carbonsäureanhydrid- und Hydroxylgruppen von 0,5:1 bis 1,05:1, vorzugsweise 0,7:1 bis 1,0:1 liegt, wobei das Äquivalentverhältnis der Summe aus Carboxyl- und Carbonsäureanhydridgruppen der Komponente c) zu Hydroxylgruppen der Komponente d) bei 1:0 bis 1:20, vorzugsweise bei 1:0 bis 1:6 und besonders bevorzugt bei 1:0 liegt. Außerdem gilt die Einschränkung, daß das Äquivalentverhältnis der gegenüber Blockierungsmitteln b) überschüssigen Isocyanatgruppen der Komponente a) zu der Summe aus Carboxyl- und Carbonsäureanhydridgruppen der Komponente c) bei mindestens 1:1 und vorzugsweise bei 1:1 liegt. Im Falle der Mitverwendung von Ausgangskomponenten d) in einer solchen Menge, daß das Äquivalentverhältnis der gegenüber den Blockierungsmitteln b) überschüssigen Isocyanatgruppen der Komponente a) zu der Summe aus Carboxyl-, Carbonsäureanhydrid- und Hydroxylgruppen der Komponenten c) und d) unter 1:1 liegt, muß während der Umsetzung dafür Sorge getragen werden, daß für jede Carboxyl- und/oder Carbonsäureanhydridgruppe der Komponente c) mindestens eine freie NCO-Gruppe zur Verfügung steht, was dann gewährleistet ist, wenn die Zugabe der Komponente d) oder zumindest der überschüssigen Teilmenge der Komponente d) zum Reaktionsgemisch erst nach Umsetzung der Komponente c) erfolgt.

Als Ausgangspolyisocyanate a) eignen sich beliebige aromatische, aliphatische oder cycloaliphatische Polyisocyanate eines einheitlichen oder im statistischen Mittel durchschnittlichen Molekulargewichts von 140 - 500 mit einer im statistischen Mittel durchschnittlichen NCO-Funktionalität von maximal 2,6 vorzugsweise von 2 - 2,2. Solche Polyisocyanate sind beispielsweise 1,4-Phenylendiisocyanat, 2,4- und 2,6-Diisocyanatotoluol (TDI) sowie beliebige Gemische dieser Isomeren, 4,4'-, 2,4'- und 2,2'-Diisocyanatodiphenylmethan (MDI) oder beliebige Gemische dieser Isomeren oder Gemische dieser Isomeren mit ihren höheren Homologen, wie sie in an sich bekannter Weise durch Phosgenierung von Anilin/Formaldehyd-Kondensaten erhalten werden, 1,5-Naphthylendiisocyanat, 1,4-Butandiisocyanat, 2-Methylpentan-1,5-diisocyanat, 1,5-Hexandiisocyanat, 1,6-Hexandiisocyanat (HDI), 1,3- und 1,4-Cyclohexandiisocyanat sowie beliebige Gemische dieser Isomeren, 2,4- und 2,6-Diisocyanato-1-methylcyclohexan sowie beliebige Gemische dieser Isomeren, 3,5,5-Trimethyl-3-isocyanatomethyl-cyclo-hexanisocyanat (IPDI) und Dicyclohexylmethan-2,4'- und -4,4'-diisocyanat und beliebige Gemische dieser Diisocyanate.

Bevorzugt werden als Ausgangspolyisocyanate a) solche mit aromatisch gebundenen Isocyanatgruppen des, gegebenenfalls im statistischen Mittel durchschnittlichen, Molekulargewichts von 174 - 300. Ganz besonders bevorzugt einzusetzende Diisocyanate sind 2,4-Diisocyanatotoluol und 2,6-Diisocyanatotoluol, die aus diesen Isomeren bestehenden technischen Gemische und 4,4'-, 2,4'- und 2,2'-Diisocyanatodiphenylmethan oder beliebige Gemische dieser Isomeren oder Gemische dieser Isomeren mit ihren höheren Homologen, wie sie in an sich bekannter Weise durch Phosgenierung von Anilin/Formaldehyd-Kondensaten erhalten werden oder auch beliebige Gemische der hier genannten aromatischen Polyisocyanate.

Als Blockierungsmittel b) sind die zur Blockierung von Isocyanatgruppen üblichen monofunktionellen Verbindungen des Molekularagewichtsbereichs 60 bis 300, vorzugsweise 87 bis 160 geeignet, wie sie z.B. bei Z. W. Wicks, Progress in Organic Coatings 3, 73 ff (1975) und 9, 3 ff (1981) genannt sind. Bevorzugt sind Phenole, aliphatische Alkohole, Oxime und Lactame. Beispielshaft seien als Blockierungsmittel b) genannt: Phenol, Kresol, Xylenol sowie deren technische Isomerengemische, Isopropanol, Cyclohexanol, 1-Methoxy-2-propanol (MP), Diethylenglykolmonoethylether, Benzylalkohol, Butanonoxim, Cyclohexanonoxim und ε-Caprolactam sowie gegebenenfalls auch Mischungen von Blockierungsmitteln. Ganz besonders bevorzugt sind Phenol, Kresole oder Xylenole.

Geeignete mindestens zwei Carboxyl- und/oder Carbonsäureanhydridgruppen aufweisende Verbindungen c) sind solche des Molekulargewichtsbereichs 90 - 400 wie beispielsweise Maleinsäure, Fumarsäure, Bernsteinsäure, Glutarsäure, Adipinsäure, Isophthalsäure, Terephthalsäure, Trimellithsäureanhydrid, Pyromellithsäureanhydrid, Naphthalintetracarbonsäuredianhydrid, Benzophenontetracarbonsäuredianhydrid, von denen Trimellithsäureanhydrid und Pyromellithsäureanhydrid besonders bevorzugt sind.

Als gegebenenfalls mitzuverwendende Polyhydroxylverbindungen d) kommen vorzugsweise Diole und/oder Triole des Molekulargewichtsbereichs 62 - 350, jedoch auch ein über 350 und bis 3.000 liegendes Molekulargewicht aufweisende höhermolekulare Polyhydroxylverbindungen in Betracht.

Geeignete Polyhydroxylverbindungen des Molekulargewichtsbereiches 62 - 350 sind beispielsweise Ethylenglykol, Propandiole, Butandiole, Hexandiole, Di-, Tri- oder Tetraethylenglykol, Di-, Tri- oder Tetrapropylenglykol, Neopentylglykol, 2-Ethyl-1,3-hexandiol, 2,2,4-Trimethyl-1,3-pentandiol, 1,4-Bis(hydroxymethyl)-cyclohexan, 2,2-Bis(4-hydroxycyclohexyl)-propan, Glycerin, Hexantriol, N,N',N''-Tris(2-hydroxyethyl)isocyanurat (THEIC) und Pentaerythrit.

Höhermolekulare Polyhydroxylverbindungen, die jedoch gegenüber den beispielhaft genannten niedermolekularen Polyhydroxylverbindungen keineswegs bevorzugt sind, sind beispielsweise die bekannten Polyhydroxypolyester, wie sie aus Dicarbonsäuren wie Phthalsäure, Isophthalsäure, Terephthalsäure oder Adipinsäure mit überschüssigen Polyolen der obengenannten Art erhalten werden. Als höhermolekulare Polyole können ebenfalls, jedoch auch weniger bevorzugt, an sich bekannte Polyhydroxypolyether, wie sie durch Alkoxylierung von niedermolekularen Startermolekülen zugänglich sind, verwendet werden.

Bei der Durchführung des erfindungsgemäßen Verfahrens können selbstverständlich auch jeweils Gemische der genannten Ausgangsmaterialien eingesetzt werden.

Bei der Durchführung des erfindungsgemäßen Verfahrens können die Ausgangsmaterialien b), c) und gegebenenfalls d) im Prinzip in beliebiger Reihenfolge mit der Polyisocyanatkomponente a) umgesetzt werden, jedoch sollte darauf geachtet werden, daß zum Zeitpunkt der Zugabe der Komponente c) im Reaktionsgemisch keine gegenüber Carboxyl- und insbesondere Anhydridgruppen unter Esterbildung reaktionsfähigen Hydroxylgruppen (mehr) vorliegen, so daß die Bildung von Urethan-, Amid- und Imidgruppen gegenüber der Bildung von Estergruppen bevorzugt ist. Aus diesem Grund verfährt man vorzugsweise dergestalt, daß man zunächst die Komponente a) mit der Komponente b) und gegebenenfalls der Komponente d) umsetzt, bevor man dem Reaktionsgemisch die Komponente c) einverleibt, wobei jedoch auch hier die bereits obengenannte Bedingung erfüllt sein muß, daß für jede Carboxyl- und Anhydridgruppe der Komponente c) mindestens eine freie Isocyanatgruppe der Komponente a) zur Verfügung steht.

Die genannten Umsetzungen werden im allgemeinen innerhalb des Temperaturbereichs von 20 - 200°C, vorzugsweise 60 - 180°C durchgeführt.

Die Durchführung des erfindungsgemäßen Verfahrens erfolgt, wie dargelegt, in der Regel in Lösung, jedoch ist es in Abhängigkeit von den Eigenschaften des gewünschten Endproduktes, wie z.B. Verzweigungsgrad und Schmelzviskosität durchaus auch möglich in Schmelze zu arbeiten.

Als Lösungsmittel geeignet sind alle an sich bekannten üblichen Lacklösemittel, die gegenüber Isocyanatgruppen inert sind, wie z.B. Ethylacetat, Burylacetat, Ethylenglykolmonomethyl- oder -ethyletheracetat, 1-Methoxypropyl-2-acetat, 2-Butanon, 4-Methyl-2-pentanon, Cyclohexanon, Toluol, Xylol, Solventnaphtha oder deren Gemische. Ebenfalls als Lösungsmittel verwendbar, jedoch weniger bevorzugt sind Weichmacher wie z.B. solche auf Basis von Phosphorsäure-, Sulfonsäure- oder Phthalsäureester. Außer den gegenüber NCO-Gruppen inerten Lacklösemitteln ist es aber auch möglich, anteilig gegenüber NCO-Gruppen reaktive Lösemittel mitzuverwenden. Diese Lösemittel werden dann erst nach beendeter oder nahezu beendeter Umsetzung, z.B. bei einem erteichten NCO-Gehalt ≦ 1 %, bevorzugt ≦ 0,5 %, zugegeben, was darauf hinausläuft, daß die im wesentlichen in Abwesenheit von derartigen Lösungsmitteln hergestellten Lackpolyisocyanate nach ihrer Herstellung in solchen Lösungsmitteln gelöst werden können. Geeignet sind bevorzugt monofunktionelle, aliphatische, cycloaliphatische, araliphatische Alkohole oder auch Phenole wie z.B. Isopropanol, n-Butanol, n-Octanol, 2-Methoxyethanol, 2-Ethoxyethanol, Diethylenglykolmonomethylether, Diethylenglykolmonoethylether, 1-Methoxy-2-propanol; Cycloalkanole wie Benzylalkohol oder Phenole wie Kresol oder Xylenol.

Aus dem Umstand, daß die hier als Lösungsmittel genannten einwertigen Alkohole oder Phenole auch als Blockierungsmittel b) in Betracht kommen können, geht bereits hervor, daß bei Verwendung derartiger Alkohole oder Phenole als Lösungsmittel diese nicht in die Berechnung der Mengenverhältnisse der Reaktionspartner a) bis d) eingehen, sondern im wesentlichen erst im Anschluß an die erfindungsgemäße Umsetzung als Lösungsmittel zur Anwendung gelangen.

Gemäß einer bevorzugten Ausführungsform des erfindungsgemäßen Verfahrens wird das Ausgangsdiisocyanat a) mit dem Blockierungsmittel b) im angegebenen Mengenverhältnis blockiert. Die Blockierung erfolgt in Abhängigkeit von der Art des Blockierungsmittels im Temperaturbereich von 20 - 200°C, bevorzugt bei 60 - 160°C, bis der berechnete NCO-Gehalt erreicht oder geringfügig unterschritten ist. Nach beendeter Blockierung wird dann das Lösungsmittel zugegeben, sofern ein gelöstes Endprodukt hergestellt werden soll, und es wird in einer zweiten Reaktionsstufe die Umsetzung des teilblockierten Diisocyanats mit der Carboxyl- und/oder Carbonsäureanhydridgruppen-haltigen Verbindung c), vorzugsweise z.B. mit Trimellithsäureanhydrid, im Temperaturbereich von 60-200°C, bevorzugt 100 - 180°C, durchgeführt, wobei CO₂-Entwicklung zu beobachten ist. Die Messung der CO₂-Abspaltung über eine angeschlossene Gasuhr dient der Reaktionskontrolle und ist ein Maß für die gebildeten Amid- und/oder Imidgruppen. Die Umsetzung ist beendet, wenn keine CO₂-Entwicklung mehr beobachtet wird und der errechnete NCO-Gehalt der Reaktionsmischung erreicht oder nahezu erreicht ist. Wird die gegebenenfalls verwendete Polyhydroxylverbindung d) mitverwendet, so läßt man diese Komponente d) gemäß der bevorzugten Ausführungsform vor, während oder nach der Umsetzung von a) mit b) einreagieren, oder läßt sie nach Umsetzung von a) mit b) und c) in einer abschließenden Reaktionsstufe einreagieren. Die Umsetzung ist in aller Regel beendet, wenn der Gehalt des Reaktionsgemischs an freien Isocyanatgruppen auf einen Wert unter 1,0 Gew.-%, vorzugsweise unter 0,5 Gew.-%, abgefallen ist.

Nach dieser bevorzugten Verfahrensvariante lassen sich erfindungsgemäße Lackpolyisocyanate als Klare Lösungen in Lacklösemitteln oder auch als lösungsmittelfreie Harze, die in der Regel als Festharz aus der Schmelze erstarren, herstellen.

Wenn gelöste Produkte hergestellt werden, kann das Lösungsmittel oder Lösungsmittelgemisch wie oben bei der bevorzugten Ausführungsform beschrieben z.B. nach der Blockierung zugegeben werden; in weiteren Ausführungsformen des erfindungsgemäßen Verfahrens kann jedoch auch die als erster Reaktionsschritt durchgeführte Blockierung bereits in Gegenwart eines geeigneten Lösungsmittels durchgeführt werden, oder aber man verfahrt so, daß die Carboxyl- und/oder Carbonsäureanhydridgruppen enthaltende Verbindung c) gemeinsam mit dem Lösungsmittel zugegeben und umgesetzt wird.

Eine weitere Ausführungsform des erfindungsgemäßen Verfahrens kann beispielsweise in einer Eintopfreaktion bestehen, bei welcher Polyisocyanat a), Blockierungsmittel b) und die Carboxyl und/oder Carbonsäureanhydridgruppen enthaltende Komponente c) gemeinsam aufgeheizt werden, wobei im Bereich von 90 - 120°C das vorzugsweise eingesetzte phenolische Blockierungsmittel abreagiert und schließlich im Bereich von 120 - 160°C die Umsetzung mit der Komponente c) unter CO₂-Abspaltung zum Amid/Imid erfolgt. Die einzelnen Reaktionsstufen überlappen sich und können in der Regel anhand NCO-Gehalts-Titration, Messung der CO₂-Menge und gegebenenfalls der beobachteten Exothermie verfolgt werden. Die Umsetzung mit dem gegebenenfalls mitverwendeten Polyol d) erfolgt sinnvollerweise vor und/oder nach der beschriebenen Eintopfreaktion. In außergewöhnlichen Fällen und keineswegs bevorzugt ist es jedoch auch möglich, das Polyisocyanat a) gleichzeitig mit den Komponenten b), c) und d) umzusetzen.

Die erfindungsgemäßen Lackpolyisocyanate stellen wertvolle Reaktionspartner für organische Polyhydroxylverbindungen dar und können in Kombination mit derartigen Polyhydroxylverbindungen als Einbrennlack oder zur Herstellung von Einbrennlacken für beliebige hitzeresistente Substrate verwendet werden. Geeignete Polyhydroxylverbindungen zur Herstellung von derartigen Lacken sind beispielsweise die nachstehend unter 1. bis 5 beispielhaft genannten Verbindungen bzw. beliebige Gemische derartiger Verbindungen.
1. Niedermolekulare, mehrwertige Alkohole mit einem maximalen Molekulargewicht von 350 und einer bei 2 bis 4 liegenden Hydroxylfunktionalität wie sie schon oben als Polyole d) beispielhaft aufgeführt wurden sowie aber z.B. auch 2,2-Bis[4-(2-hydroxyethoxy)-phenyl]propan, 2,2-Bis[4-(2-hydroxypropoxy)-phenyl]propan, Maleinsäure-bis-ethylenglykolester oder Adipinsäure-bis-ethylenglykolester.
2. Höhermolekulare Polyhydroxylpolyester des Hydroxylzahlbereichs 25 bis 600, vorzugsweise 40 bis 400 mg KOH/g, wie sie durch Umsetzung von mehrbasischen Carbonsäuren wie z.B. Adipinsäure, Phthalsäure, Tetrahydrophthalsäure, Hexahydrophthalsäure oder von deren Anhydriden mit überschüssigen Mengen an mehrwertigen Alkoholen der unter 1. beispielhaft genannten Art zugänglich sind, und die ein aus OH-Gehalt und -Funktionalität errechenbares Molekulargewicht von über 350 aufweisen.
3. Von den Alkoholen 1) verschiedene, aliphatisch gebundene Hydroxylgruppen aufweisende Oligourethane des Hydroxylzahlbereichs 50 bis 400, vorzugsweise 80 bis 250 mg KOH/g, wie sie durch Umsetzung der bereits unter 1. genannten, gegebenenfalls Ethergruppen aufweisenden Alkandiole oder -triole mit unterschüssigen Mengen an Diisocyanaten der auch als erfindungsgemäße Ausgangsmaterialien geeigneten und oben unter a) genannten Art erhalten werden und wie sie beispielsweise in DE-PS 1 644 794 oder in GB-PS 1 195 886 beschrieben sind.
4. Von den Alkoholen 1) verschiedene, hydroxylgruppenhaltige Copolymerisate des Hydroxylzahlbereichs 20 bis 200, vorzugsweise 60 bis 200 mg KOH/g, wie sie durch Copolymerisation von z.B. Hydroxyalkylacrylaten bzw. -methacrylaten mit Acryl- bzw. Methacrylsäurealkylestern, sowie gegebenenfalls weiteren olefinisch ungesättigten Monomeren wie z.B. Styrol und/oder wie sie gemäß der DE-OS 2 137 239 aus Styrol-Maleinsäure-Copolymerisaten durch teilweise Veresterung der Säuregruppen mit Ethylenoxid erhalten werden.
5. Von den Alkoholen 1) verschiedene, hydroxylgruppen-aufweisende Polycarbonate der an sich bekannten Art des Hydroxylzahlbereichs 50 bis 650, vorzugsweise 100 bis 450 mg KOH/g, wie sie z.B. durch Umsetzung von Diolen wie 1,3-Propandiol, 1,4-Butandiol und/oder 1,6-Hexandiol, Di-, Tri- und/oder Tetraethylenglykol mit Diarylcarbonaten, z.B. Diphenylcarbonat, oder Phosgen hergestellt werden können, vorzugsweise Polycarbonate auf Basis von 1,6-Hexandiol sowie gegebenenfalls modifizierend wirkende Co-Diole in untergeordneten Mengen (ca. 5 - 35 Mol-% der Diole). Auch Polycarbonate auf Basis von HO(CH₂)₆-O-CO-(CH₂)₅-OH kommen in Frage.

Die unter 2. und 3. beispielhaft genannten Verbindungen sind die bevorzugten Reaktionspartner für die erfindungsgemäßen Lackpolyisocyanate bei der Herstellung von Einbrennlacken. Neben den beispielhaft genannten Reaktionspartnern können in den Einbrennlacken jedoch auch noch weitere gegenüber Isocyanatgruppen reakfionsfähige Verbindungen vorliegen, obwohl dies im allgemeinen weniger bevorzugt ist. In diesem Zusammenhang sind z.B. Hydroxylgruppen aufweisende oligomere Epoxide, Imidester, Imidesteramide, Hydantoine oder Aminogruppen aufweisende Verbindungen wie Hexamethylendiamin, Melamin/Formaldehydharze oder Aminopolyether zu nennen.

Durch Wahl des Molekulargewichts der einzusetzenden Polyhydroxylverbindungen können die mahroskopischen Eigenschaften des bei der erfindungsgemäßen Verwendung entstehenden Flächengebildes auf einfache Weise variiert werden. So führt im allgemeinen die Verwendung von höhermolekularen Polyhydroxylverbindungen zu elastischeren, die Verwendung von niedermolekularen Polyhydroxylverbindungen zu härteren Beschichtungen.

Bei der genannten ersten erfindungsgemäßen Verwendung werden die erfindungsgemäßen Lackpolyisocyanate mit den beispielhaft genannten Polyhydroxylverbindungen in solchen Mengenverhältnissen kombiniert, daß das Äquivalentverhältnis von (i) blockierten Isocyanatgruppen der Lackpolyisocyanate zu (ii) der Summe aus in den Lackpolyisocyanaten gegebenenfalls vorhandenen Hydroxylgruppen und den Hydroxylgruppen der zugesetzten Polyhydroxylverbindungen 2:1 bis 1:1,2 beträgt.

Aus diesem Äquivalentverhältnis ist unmittelbar herleitbar, daß es sich bei den erfindungsgemäßen Lackpolyisocyanaten auch um in der Hitze selbstvernetzende Einkomponenten-Bindemittel handeln kann, falls die Konzentration der gegebenenfalls in den Lackpolyisocyanaten chemisch gebundenen Hydroxylgruppen für sich allein dem genannten Äquivalentverhältnis entspricht. Bei dieser, erfindungsgemäß weniger bevorzugt und daher auch nicht beanspruchten Variante einer denkbaren Verwendung der erfindungsgemäßen Lackpolyisocyanate gelten die nachstehenden Ausführungen bezüglich möglicher Hilfs- und Zusatzstoffe sinngemäß.

Die Kombinationen der erfindungsgemäßen Lackpolyisocyanate mit den beispielhaft genannten Polyhydroxylverbindungen können als solche als Einbrennlacke Verwendung finden. Sie können jedoch auch noch mit Hilfs- und Zusatzmitteln wie beispielsweise Lösungsmitteln, Katalysatoren, Pigmenten und dergleichen abgemischt werden.

Geeignete Lösungsmittel sind insbesondere die bereits oben beispielhaft genannten Lösungsmittel. Im Falle der Verwendung von einwertigen Alkoholen oder Phenolen als Lösungsmittel werden diese während des Einbrennvorgangs durch die nicht flüchtigen Polyhydroxylverbindungen verdrängt, so daß sie zusammen mit dem Blockierungsmittel aus dem Reaktionsgemisch während des Einbrennvorgangs abdestillieren. Für die erfindungsgemäß bevorzugte Drahtlackierung werden im allgemeinen 15 - bis 75-, insbesondere 20- bis 60-gew-%ige Lösungen der Kombinationen aus Lackpolyisocyanat und Polyhydroxylverbindungen eingesetzt.

Beispiele von erfindungsgemäß zu verwendenden Katalysatoren sind im Kunststoffhandbuch (Hrsg. Becker/Braun), Bd. 7, Polyurethane, S. 92 ff, Carl Hanser Verlag, München Wien 1983, beschrieben. Geeignet sind beispielsweise auch die in DE-AS 2 626 175, Kolonne 7, Zeile 35 bis Kolonne 8, Zeile 27, beschriebenen Katalysatoren. Besonders geeignet sind organische Metallkatalysatoren wie insbesondere organische Titan-, Zink- oder Zinnverbindungen wie Tetraisopropyltitanat, Zinkoctoat, Dibutylzinnoxid oder Dibutylzinndilaurat.

Die Katalysatoren werden, falls überhaupt, in einer Menge von 0,01 bis 5,0, vorzugsweise 0,1 bis 3,0 Gew.-%, bezogen auf die erfindungsgemäßen blockierten Polyisocyanate eingesetzt.

Die durch Abmischung bei Raumtemperatur aus den genannten erfindungswesentlichen Komponenten bzw. Hilfs- und Zusatzmitteln erhaltenen Gemische sind bei Raumtemperatur oder mäßig erhöhter Temperatur (bis ca. 50°C) lagerbeständig und reagieren beim Erhitzen auf Temperaturen von oberhalb 60°C, vorzugsweise von 100 - 500°C und insbesondere von 180 - 400°C unter gleichzeitigem Verdampfen der gegebenenfalls vorliegenden flüchtigen Bestandteile (z.B. Lösungsmittel) zu vernetzten Kunststoffen aus.

Die unter erfindungsgemäßer Verwendung der erfindungsgemäßen Lackpolyisocyanate hergestellten Einbrennlacke eignen sich zur Lackierung von beliebigen hitzeresistenten Substraten, insbesondere von Glasfasern und anders bevorzugt von Metalldrähten. Die aus Kombinationen der erfindungsgemäßen Lackpolyisocyanate mit organischen Polyhydroxylverbindungen oder aus Abmischungen derartiger Kombinationen mit Hilfs- und Zusatzmitteln der genannten Art bestehenden Einbrennlacke können nach allen Methoden der Beschichtungstechnologie auf die Substrate aufgetragen werden, worauf sich eine Aushärtung der Beschichtung innerhalb der oben genannten Temperaturbereiche anschließt.

Bei der bevorzugten Drahtlackierung erfolgt die Beschichtung der Drähte nach den an sich bekannten Tauch-, Rollenauftrags- oder Saugfilzverfahren, worauf sich die Trocknung, d.h. die Aushärtung der Lackschichten in den üblichen Trockenöfen innerhalb der genannten Temperaturbereiche anschließt. Bei der Verwendung der erfindungsgemäßen Produkte als Vernetzer für Drahtlackierungen sind hier insbesondere die hervorragende Lötbarkeit trotz der hohen Wärmebeständigkeit, die höhere Erweichungstemperatur und höhere Hitzeschocktemperatur bei einer hervorragenden Wasserfestigkeit und einem besonders hohen tan δ-Knickpunkt der erhaltenen Lackdrähte im Vergleich zu herkömmlichen bekannten Produkten des Standes der Technik hervorzuheben.

Wegen der ausgezeichneten elektrischen und mechanischen Eigenschaften der aus den erfindungsgemäßen Lackpolyisocyanaten und den beispielhaft genannten Polyhydroxylverbindungen unter Hitzeeinwirkung entstehenden Kunststoffe eignen sich die genannten Kombinationen aus erfindungsgemäßen Lackpolyisocyanaten und beispielhaft genannten Polyhydroxylverbindungen bzw. die Abmischungen dieser Kombinationen mit den beispielhaft genannten Hilfs- und Zusatzmitteln auch zur Herstellung von Isoliergeweben oder zur Imprägnierung von Elektromotoren.

Gemäß der zweiten erfindungsgemäßen Verwendung der erfindungsgemäßen Lackpolyisocyanate zur Herstellung von Hydroxylgruppen und gegebenenfalls blockierte Isocyanatgruppen aufweisenden Bindemitteln oder Bindemittelkomponenten werden die erfindungsgemäßen Lackpolyisocyanate mit organischen Polyhydroxylverbindungen e) abgemischt und/oder umgesetzt, wobei die Polyhydroxylverbindungen e) in solchen Mengen eingesetzt werden, die einem Äquivalentverhältnis von (i) blockierten Isocyanatgruppen der Lackpolyisocyanate zu (ii) der Summe aus Hydroxylgruppen der Komponente e) und gegebenenfalls in den Lackpolyisocyanaten bereits vorhandenen Hydroxylgruppen von 1:1,21 bis 1:3, vorzugsweise 1:1,4 bis 1:2,5 entsprechen.

Die hierbei zum Einsatz gelangenden Polyhydroxylverbindungen e) weisen ein Molekulargewicht von 62 bis 350 auf und entsprechen der beispielhaft gemachten Offenbarung im Zusammenhang mit den Polyhydroxylverbindungen d) und können diesen entsprechen oder auch von diesen verschieden sein.

Bei dieser zweiten erfindungsgemäßen Verwendung entstehen blockierte Isocyanatgruppen und freie Hydroxylgruppen aufweisende Kompositionen, falls die blockierten Isocyanatgruppen nicht oder nur unvollständig mit den Hydroxylgruppen umgesetzt werden. Falls jedoch durch geeignete Temperaturführung (z.B. Erhitzen auf 120 bis 200°C) dafür Sorge getragen wird, daß die blockierten Isocyanatgruppen praktisch vollständig mit den im Überschuß vorliegenden Hydroxylgruppen unter Freisetzung des Blockierungsmittels abreagieren, entstehen bei der zweiten erfindungsgemäßen Verwendung Hydroxylgruppen aufweisende Kompositionen die praktisch keine blockierten Isocyanatgruppen mehr enthalten. Das freigesetzte Blockierungsmittel (z.B. Kresol) kann dann als Lösungsmittel dienen oder aber auch, gewünschtenfalls, destillativ entfernt werden.

In jedem Fall entstehen bei der zweiten erfindungsgemäßen Verwendung Kompositionen, deren Gehalt an blockierten Isocyanatgruppen für eine Endvernetzung zu gering ist. Die bei der zweiten erfindungsgemäßen Verwendung anfallenden Kompositionen müssen daher vor ihrer Endverwendung als Bindemittelkomponente mit weiteren blockierten Isocyanatgruppen beispielsweise der an sich bekannten Art abgemischt werden. Bezüglich der Endverwendung der so hergestellten Gemische gelten die oben gemachten Ausführungen bezüglich der Mitverwendung von Hilfs- und Zusatzstoffen und der Verarbeitung sinngemäß.

In den nachfolgenden Beispielen beziehen sich alle Prozentangaben auf Gewichtsprozente. Die Gehalte an blockierten NCO-Gruppen wurden als "NCO", d.h. unter Zugrundelegung eines Molekulargewichts von 42 berechnet. Die Gehalte an Urethangruppen beziehen sich ausschließlich auf die durch Reaktion von Isocyanatgruppen mit mehrwertigen Alkoholen gebildeten Urethangruppen und umfassen demzufolge nicht die aus Isocyanatgruppen und einwertigen alkoholischen oder phenolischen Blockierungsmitteln gebildeten blockierten Isocyanatgruppen, die chemisch selbstverständlich ebenfalls Urethangruppen darstellen. Alle Angaben bezüglich des Amid-/Imid-Gehalts beziehen sich auf die beiden Gruppen gemeinsamer Struktureinheit -CO-N= (Molekulargewicht = 42).

### Beispiele

### Beispiel 1 (Herstellung)

Zu 4019 Gew.-Teilen eines Polyisocyanatgemischs der Diphenylmethanreihe mit einem NCO-Äquivalentgewicht von 130,5, welches zu 90 % aus Diisocyanatodiphenylmethan-Isomeren und zu 10 % aus höheren Homologen besteht, werden bei 80°C beginnend 2661 Gew.-Teile Kresol (technisches Isomerengemisch) unter Aufheizen bis 130°C innerhalb ca. 1 h zugetropft. Man läßt in Gegenwart von 1 Gew.-Teil Diazabicyclooctan als Katalysator ca. 8 bis 15 h bei 120 bis 140°C reagieren, bis ein NCO-Gehalt von 3,9 bis 4,3 % erreicht ist (NCOₜₕₑₒᵣ = 3,9 %). Man löst in 2867 Gew.-Teilen 1-Methoxypropyl-2-acetat (MPA) und gibt bei ca. 120°C portionsweise 591 Gew.-Teile Trimellithsäureanhydrid zu. Man rührt für 24 bis 28 h bei 150 bis 160°C und beendet die Umsetzung, wenn keine über eine Gasuhr gemessene CO₂-Entwicklung mehr beobachtet wird. Man gibt weitere 132 Gew.-Teile Kresol als Lösungsmittel zu und erhält eine Klare Lösung des blockierten Polyisocyanats mit folgenden Kenndaten (alle Angaben beziehen sich hier und in den folgenden Herstellungsbeispielen auf die Lösung):

| | |
|---|---|
| Konzentration: | 70 % |
| Viskosität (23°C): | 41 000 mPa.s |
| freier NCO-Gehalt: | 0,6 % |
| blockierter NCO-Gehalt: | 10,3 % |
| Amid-/Imid-Gehalt: | 2,6 % |

### Beispiel 2 (Herstellung)

Zu 3161 Gew.-Teilen des Polyisocyanatgemischs der Diphenylmethanreihe gemäß Beispiel 1 werden bei 80°C beginnend 1831 Gew.-Teile Kresol (technisches Isomerengemisch) unter Aufheizen bis 130°C innerhalb ca. 1 h zugetropft. Man läßt in Gegenwart von 1 Gew.-Teil Diazabicyclooctan als Katalysator ca. 10 h bei 130 bis 140°C reagieren und gibt dann 2302 Gew.-Teile MPA als Lösungsmittel zu. Bei ca. 120°C werden 698 Gew.-Teile Trimellithsäureanhydrid portionsweise eingetragen, und man läßt 24 bis 48 h bei 150 bis 160°C unter CO₂-Entwicklung reagieren. Die Umsetzung ist beendet, wenn keine Gasentwicklung mehr beobachtet wird. Die Lösung des blockierten Polyisocyanats hat folgende Kenndaten:

| | |
|---|---|
| Konzentration: | 70 % |
| freier NCO-Gehalt: | 0,8 % |
| blockierter NCO-Gehalt: | 9,3 % |
| Amid-/Imid-Gehalt: | 4,0 % |

### Beispiel 3 (Herstellung)

Zu einer Lösung von 2981 Gew.-Teilen des Polyisocyanatgemischs der Diphenylmethanreihe gemaß Beispiel 1 in 4920 Gew.-Teilen MPA werden in Gegenwart von 1 Gew.-Teil Diazabicyclooctan als Katalysator bei 80 bis 100°C 1603 Gew.-Teile Kresol zugetropft. Unmittelbar danach werden bei 100 bis 120°C portionsweise 767 Gew.-Teile Trimellithsäureanhydrid zugegeben und die Reaktionstemperatur auf 150 bis 160°C erhöht. Als nach ca. 40 h über eine angeschlossene Gasuhr keine CO₂-Entwicklung mehr beobachtet wird, werden 80 Gew.-Teile überschüssiges Kresol zugegeben und 2 h bei 120°C nachgerührt. Man erhält eine klare Lösung des blockierten Polyisocyanats mit folgenden Kenndaten:

| | |
|---|---|
| Konzentration: | 50 % |
| Viskosität (23°C): | 2800 mPa.s |
| freier NCO-Gehalt: | 0,2 % |
| blockierter NCO-Gehalt: | 6,2 % |
| Amid-/Imid-Gehalt: | 3,4 % |

### Beispiel 4 (Herstellung)

Zu 3973 Gew.-Teilen des Polyisocyanatgemischs der Diphenylmethanreihe gemäß Beispiel 1 werden bei 80 bis 100°C 2631 Gew.-Teile Kresol innerhalb ca. 1 h zugetropft und in Gegenwart von 1 Gew.-Teil Diazabicyclooctan als Katalysator bei 120 bis 140°C für ca. 4 h reagieren gelassen. Bei einem NCO-Gehalt von 7,0 % (NCOₜₕₑₒᵣ = 3,9 %) wird in 2870 Gew.-Teilen MPA gelöst, und bei 120°C werden 664 Gew.-Teile Pyromellithsäuredianhydrid portionsweise zugegeben. Man rührt ca. 40 h bei 150 bis 160°C, bis die über eine Gasuhr gemessene CO₂-Entwicklung zum Stillstand gekommen ist. Man gibt weitere 130 Gew.-Teile überschüssiges Kresol zu und rührt 2 h bei 130°C nach. Es wird eine klare Lösung des blockierten Polyisocyanats mit folgenden Kenndaten erhalten:

| | |
|---|---|
| Konzentration: | 70 % |
| Viskosität (23°C): | 32 000 mPa.s |
| freier NCO-Gehalt: | 0,8 % |
| blockierter NCO-Gehalt: | 10,2 % |
| Imid-Gehalt: | 2,5 % |

### Beispiel 5 (Herstellung)

Zu 3206 Gew.-Teilen 2,4- und 2,6-Diisocyanatotoluol (TDI, Isomerengemisch 80:20) wird bei 80°C innerhalb ca. 1 h eine Mischung aus 2079 Gew.-Teilen Phenol, 332 Gew.-Teilen 1,3-Butandiol und 1 Gew.-Teil Diazabicyclooctan zugetropft. Man läßt ca. 10 h bei 130°C reagieren, bis ein NCO-Gehalt von 5,7 % (NCOₜₕₑₒᵣ = 5,5 %) erreicht ist, und gibt 3200 Gew.-Teile MPA als Lösungsmittel zu. 707 Gew.-Teile Trimellithsäureanhydrid werden portionsweise eingetragen und man läßt ca. 40 h bei 150°C reagieren, bis über eine angeschlossene Gasuhr keine CO₂-Entwicklung mehr zu beobachten ist. Nach Zugabe von 800 Gew.-Teilen Phenol und 1 h Nachrühren bei 125°C erhält man eine klare Lösung des blockierten Polyisocyanats mit folgenden Kenndaten:

| | |
|---|---|
| Konzentration: | 60 % |
| Viskosität (23°C): | 22 000 mPa.s |
| freier NCO-Gehalt: | 0,1 % |
| blockierter NCO-Gehalt: | 9,3 % |
| Amid-/Imid-Gehalt: | 3,1 % |

### Beispiel 6 (erste erfindungsgemäße Verwendung)

268 Gew.-Teile der Lösung des Amid-/Imidgruppen enthaltenden blockierten Polyisocyanats gemäß Herstellbeispiel 1 werden zusammen mit 162 Gew.-Teilen eines festen Hydroxyurethans, das seinerseits aus 99,9 Gew.-Teilen 4,4'-Diisocyanatodiphenylmethan, 30,8 Gew.-Teilen Trimethylolpropan, 16,9 Gew.-Teilen Diethylenglykol und 14,4 Gew.-Teilen 1,3-Butandiol hergestellt wurde und eine Hydroxylzahl von 180 mg KOH/g aufweist, in einem Lösemittelgemisch aus 285 Gew.-Teilen Kresol und 285 Gew.-Teilen Xylol gelöst. Der erhaltenen Lösung werden 10,5 Gew.-Teile eines Aldimins auf Basis Anilin und Butyraldehyd als Katalysator zugegeben.

| | |
|---|---|
| Festkörper: | 35 % |
| Auslaufzeit (4 mm-DIN-Becher): | 51 s (DIN 53 211) |

Mit der so hergestellten Lösung wird auf einer horizontalen Drahtlackieranlage der Fa. Aumann, Espelkamp, BRD, Typ FLK 240 mit einer Ofenlange von 2.40 m (leicht modifiziert für mittelstarke Drahtdurchmesser) ein Kuperdraht von 0,5 mm Durchmesser mittels Filzabstreifern in 7 Durchzügen, bei einer Ofentemperatur von 450°C/500°C mit einer Geschwindigkeit von 23 m/min lackiert.

Der Lackdraht ist bei 370°C innerhalb 3 sec verzinnbar (IEC 851/Teil 4, Prüfung 17), der tan-delta-Knickpunkt (IEC 851, Teil 5, Prüfung 19) liegt bei 185°C, die Erweichungstemperatur nach IEC 851, Teil 6, 4.1.2 beträgt 250°C. Der Lackfilm zeigt eine hohe Flexibilität: nach 20 % Vordehnung läßt sich der Draht um einen zylindrischen Dorn von 0,5 mm wickeln, ohne daß der Lackfilm Risse aufweist. Bleistift-Härte nach Lösungsmitteleinwirkung: 2H (IEC 851/Teil 4, 3.12, anstelle des Gemischs aus Benzin, Xylol und Butanol wurde Ethanol verwendet). Die Lackdrähte zeigen beim Dehnen unter Wasser keine Bildung von Haarrissen.

### Beispiel 7 (erste erfindungsgemäße Verwendung)

242 Gew.-Teile der Lösung des Amid-/Imidgruppen aufweisenden blockierten Polyisocyanats gemäß Herstellbeispiel 4 werden zusammen mit 181 Gew.-Teilen eines festen Hydroxyurethans, das seinerseits aus 111,7 Gew.-Teilen 4,4'-Diisocyanatodiphenylmethan, 34,4 Gew.-Teilen Trimethylolpropan, 18,8 Gew.-Teilen Diethylenglykol und 16,1 Gew.-Teilen 1,3-Butandiol hergestellt wurde und eine Hydroxylzahl von 180 mg KOH/g aufweist, in einem Lösemittelgemisch aus 289 Gew.-Teilen Kresol und 288 Gew.-Teilen Xylol gelöst. Der erhaltenen Lösung werden 10,5 Gew.-Teile eines Aldimins aus Anilin und Butyraldehyd als Katalysator zugegeben.

| | |
|---|---|
| Festkörper: | 35 % |
| Auslaufzeit (4 mm-DIN-Becher): | 48 s (DIN 53 211) |

Mit der so hergestellten Lösung wird auf einer horizontalen Drahtlackieranlage der Fa. Ausmann, Espelkamp, BRD, Typ FLK 240 mit einer Ofenlänge von 2,40 m ein Kupferdraht von 0,5 mm Durchmesser mittels Filzabstreifern in 7 Durchzügen, bei einer Ofentemperatur von 450°C/500°C mit einer Geschwindigkeit von 23 m/min lackiert.

Der Lackdraht ist bei 370°C innerhalb von 4 s verzinnbar (IEC 851) der tan-delta-Knickpunkt (IEC 851, Teil 5, Prüfung 19) liegt bei 200°C, die Erweichungstemperatur nach IEC 851, Teil 6, 4.1.2 beträgt 260°C. Der Lackfilm zeigt eine hohe Flexibilität: nach 20 % Vordehnung läßt sich der Draht um einen zylindrischen Dorn von 0,5 mm wickeln, ohne daß der Lackfilm Risse aufweist. Bleistift-Härte nach Lösungsmitteleinwirkung: 5H (IEC 851/Teil 4, 3.12, anstelle des Gemischs aus Benzin, Xylol und Butanol wurde Ethanol verwendet). Die Lackdrähte zeigen beim Dehnen unter Wasser keine Bildung von Haarrissen.

### Beispiel 8 (zweite erfindungsgemäße Verwendung)

Zu der gemäß Beispiel 2 hergestellten Lösung eines erfindungsgemäßen Lackpolyisocyanats werden 844 Gew.-Teile Trimethylolpropan, 334 Gew.-Teile Diethylenglykol, 283 Gew.-Teile 1,3-Butandiol, sowie 241 Gew.-Teile Kresol und 626 Gew.-Teile MPA-zugegeben und 4 h bei 150°C homogenisiert. Die erhaltene Lösung hat folgende Kenndaten:

| | |
|---|---|
| Konzentration: | 68 % |
| Viskosität (23°C): | 41 000 mPa.s |
| freier NCO-Gehalt: | 0 % |
| Hydroxylzahl: | 176 g KOH/g |

Von den dieser Hydroxylzahl entsprechenden Hydroxylgruppen stehen 47 % für eine Vernetzungsreaktion mit zugesetztem weiterem blockiertem Polyisocyanat zur Verfügung. Die restlichen, der genannten Hydroxylzahl entsprechenden Hydroxylgruppen entsprechen der Menge der in dem Lackpolyisocyanat vorliegenden blockierten Isocyanatgruppen. Das als Lösungsmittel zugesetzte und als Blockierungsmittel abgespaltene Kresol bleibt bezüglich der Hydroxylzahl unberücksichtigt.

### Beispiel 9

294 Gew.-Teile der gemäß Beispiel 8 erhaltenen Lösung werden gemeinsam mit 150 Gew.-Teilen eines mit Phenol blockierten Polyisocyanats, hergestellt als Festharz aus 2,4- und 2,6-Diisocyanatoluol (TDI, Isomerengemisch 80:20), Trimethylolpropan, 1,3-Butandiol und Phenol, mit einem blockierten NCO-Gehalt von 12 % in 278 Gew.-Teilen Kresol und 278 Gew.-Teilen Xylol gelöst und mit 10,5 Gew.-Teilen eines Aldimins aus Anilin und Butyraldehyd als Katalysator versetzt.

| | |
|---|---|
| Festkörper: | 35 % |
| Auslaufzeit (4 mm-DIN-Becher): | 21s (DIN 53 211) |

Auf einer horizontalen Drahtlackieranlage der Fa. Aumann, Espelkamp, BRD, Typ FLK 240 mit einer Ofenlänge von 2,40 m wird ein Kupferdraht von 0,5 mm Durchmesser mittels Filzabstreifern in 7 Durchzügen, bei einer Ofentemperatur von 450°C/500°C mit einer Geschwindigkeit von 23 m/min mit dieser Lösung lackiert.

Der Lackdraht ist bei 370°C innerhalb von 3 s verzinnbar (IEC 851), der tan-delta-Knickpunkt (IEC 851, Teil 5, Prüfung 19) liegt bei 180°C, die Erweichungstemperatur nach IEC 851, Teil 6, 4.1.2 beträgt 250°C. Der Lackfilm zeigt eine hohe Flexibilität: nach 20 % Vordehnung läßt sich der Draht um einen zylindrischen Dorn von 0,5 mm wickeln, ohne daß der Lackfilm Risse aufweist. Bleistift-Härte nach Lösungsmitteleinwirkung: 5H (IEC 851/Teil 4, 3.12, anstelle des Gemischs aus Benzin, Xylol und Butanol wurde Ethanol verwendet).

### Beispiel 10

294 Gew.-Teile der gemäß Beispiel 8 erhaltenen Lösung werden gemeinsam mit 150 Gew.-Teilen eines mit Kresol blockierten Polyisocyanats, hergestellt als Festharz aus 4,4'-Diisocyanatodiphenylmethan (MDI), Trimethylolpropan, 1,6-Hexandiol und Kresol, mit einem blockierten NCO-Gehalt von 11 % in 278 Gew.-Teilen Kresol und 278 Gew.-Teilen Xylol gelöst und mit 10,5 Gew.-Teilen eines Aldimins aus Anilin und Butyraldehyd als Katalysator versetzt.

| | |
|---|---|
| Festkörper: | 35 % |
| Auslaufzeit (4 mm-DIN-Becher): | 21s (DIN 53 211) |

Mit der so hergestellten Lösung wird auf einer horizontalen Drahtlackieranlage der Fa. Aumann, Espelkamp, BRD, Typ FLK 240 mit einer Ofenlänge von 2,40 m ein Kupferdraht von 0,5 mm Durchmesser mittels Filzabstreifern in 7 Durchzügen, bei einer Ofentemperatur von 450°C/500°C mit einer Geschwindigkeit von 23 m/min lackiert.

Der Lackdraht ist bei 370°C innerhalb von 3 s verzinnbar (IEC 851) der tan-delta-Knickpunkt (IEC 851, Teil 5, Prüfung 19) liegt bei 190°C, die Erweichungstemperatur nach IEC 851, Teil 6, 4.1.2 beträgt 250°C. Der Lackfilm zeigt eine hohe Flexibilität: nach 20 % Vordehnung läßt sich der Draht um einen zylindrischen Dorn von 0,5 mm wickeln, ohne daß der Lackfilm Risse aufweist. Bleistift-Härte nach Lösungsmitteleinwirkung: 5H (IEC 851/Teil 4, 3.12, anstelle des Gemischs aus Benzin, Xylol und Butanol wurde Ethanol verwendet). Die Lackdrähte zeigen beim Dehnen unter Wasser keine Bildung von Haarrissen.

### Beispiel 11 (erste erfindungsgemäße Verwendung)

187 Gew.-Teile der Lösung des Amid-/Imidgruppen enthaltenden blockierten Polyisocyanats gemäß Herstellbeispiel 1 werden zusammen mit 313 Gew.-Teilen der gemäß Beispiel 8 erhaltenen Lösung in einem Lösemittelgemisch aus 250 Gew.-Teilen Kresol und 250 Gew.-Teilen Xylol gelöst. Zu der erhaltenen Lösung werden 10,5 Gew.-Teile eines Aldimins aus Anilin und Butyraldehyd als Katalysator gegeben.

| | |
|---|---|
| Festkörper: | 35 % |
| Auslaufzeit (4 mm-DIN-Becher): | 18 s (DIN 53 211) |

Auf einer horizontalen Drahtlackieranlage der Fa. Aumann, Espelkamp, BRD, Typ FLK 240 mit einer Ofenlänge von 2,40 m wird ein Kupferdraht von 0,5 mm Durchmesser mittels Filzabstreifern in 7 Durchzügen, bei einer Ofentemperatur von 450°C/500°C mit einer Geschwindigkeit von 23 m/min mit dieser Lösung lackiert.

Der Lackdraht ist bei 370°C innerhalb von 3 s verzinnbar (IEC 851) der tan-delta-Knickpunkt (IEC 851, Teil 5, Prüfung 19) liegt bei 220°C, die Erweichungstemperatur nach IEC 851, Teil 6, 4.1.2 betragt 270°C. Der Lackfilm zeigt eine hohe Flexibilität: nach 20 % Vordehnung läßt sich der Draht um einen zylindrischen Dom von 0,5 mm wickeln, ohne daß der Lackfilm Risse aufweist. Bleistift-Härte nach Lösungsmitteleinwirkung: 5H(IEC 851/Teil 4, 3.12, anstelle des Gemischs aus Benzin, Xylol und Butanol wurde Ethanol verwendet). Die Lackdrähte zeigen beim Dehnen unter Wasser keine Bildung von Haarrissen.

## Patentansprüche

1. Lackpolyisocyanate mit blockierten Isocyanatgruppen, gekennzeichnet durch das gleichzeitige Vorliegen von
(i) 0,5 - 10 Gew.-% an Amid- und/oder Imidstruktureinheiten (berechnet als ―CO―N〈 , MG = 42),
(ii) 5 - 20 Gew.-% an Isocyanantgruppen (berechnet als -NCO, MG = 42) in mit im Sinne der Isocyanat-Additionsreaktion monofunktionellen Blockierungsmitteln für Isocyanatgruppen blockierter Form und
(iii) 0 - 30 Gew.-% an sonstigen, von den blockierten Isocyanatgruppen verschiedenen, chemisch eingebauten, aus der Umsetzung von Isocyanatgruppen mit Hydroxylgruppen organischer Polyhydroxylverbindungen resultierenden-Urethangruppen (berechnet als -NH-CO-O-, MG = 59)

2. Verfahren zur Herstellung von Lackpolyisocyanaten mit blockierten Isocyanatgruppen gemäß Anspruch 1, dadurch gekennzeichnet, daß man
a) organische Polyisocyanate mit einer im statistischen Mittel durchschnittlichen NCO-Funktionalität von maximal 2,6 eines einheitlichen oder im statistischen Mittel durchschnitttichen Molekulargewichtsbereichs von 140 - 500 mit
b) Blockierungsmitteln für Isocyanatgruppen,
c) mindestens zwei Carboxyl- und/oder Carbonsäureanhydridgruppen aufweisenden Verbindungen des Molekulargewichtsbereichs 90-400
und gegebenenfalls
d) organischen Polyhydroxylverbindungen des Molekulargewichtsbereichs 62 - 3000 umsetzt,
wobei die Menge des Blockierungsmittels b) in einer zur Blockierung von 20 - 95 % der Isocyanatgruppen der Komponente a) ausreichenden Menge und die Komponenten c) und gegebenenfalls d) in einer solchen Menge eingesetzt werden, die einem Äquivalentverhältverhältnis von nach der Blockierungsreaktion noch vorliegenden freien Isocyanatgruppen zur Summe aus Carboxyl-, Carbonsäureanhydrid- und Hydroxylgruppen von 0,5:1 bis 1,05:1 entspricht, wobei das Äquivalentverhältnis der Summe aus Carboxyl- und Carbonsäureanhydridgruppen der Komponente c) zu Hydroxylgruppen der Komponente d) bei 1:0 bis 1:20 liegt, und wobei die Reaktionspartner a) bis d) in beliebiger Reihenfolge miteinander umgesetzt werden.

3. Verfahren gemäß Anspruch 2, dadurch gekennzeichnet, daß man die Blockierungsmittel b) in einer solchen Menge verwendet, die zur Blockierung von 35 - 90 % der Isocyanantgruppen der Komponente a) ausreicht, und die Komponenten c) und gegebenenfalls d) in einer solchen Menge verwendet, die einem Äquivalentverhältnis von nach der Blockierungsreaktion noch vorliegenden unblockierten Isocyanatgruppen zur Summe aus Carboxyl-, Carbonsäureanhydrid- und Hydroxylgruppen von 0,7:1 bis 1:1 entspricht, wobei das Äquivalentverhältnis der Summe aus Carboxyl- und Carbonsäureanhydridgruppen der Komponente c) zu Hydroxylgruppen der Komponente d) bei 1:0 bis 1:6 liegt.

4. Verfahren gemäß Anspruch 2 und 3, dadurch gekennzeichnet, daß man als Komponente a) Polyisocyanate mit aromatisch gebundenen Isocyanatgruppen einer im statistischen Mittel durchschnittlichen NCO-Funktionalität von 2 bis 2,2 eines, gegebenenfalls im statistischen Mittel durchschnittlichen, Molekulargewichts von 174 - 300 verwendet.

5. Verfahren gemäß Anspruch 2 bis 4, dadurch gekennzeichnet, daß man als Komponente b) Blockierungsmittel, ausgewählt aus der Gruppe bestehend aus Phenolen, aliphatischen Alkoholen, Oximen und Lactamen verwendet.

6. Verfahren gemäß Anspruch 2 bis 5, dadurch gekennzeichnet, daß man als Komponente c) Trimellitsäureanhydrid oder Pyromellithsäuredianhydrid verwendet.

7. Verfahren gemäß Anspruch 2 bis 6, dadurch gekennzeichnet, daß man als Komponente d) gegebenenfalls Etherbrücken aufweisende oder eingebaute Isocyanuratringe aufweisende aliphatische und/oder cycloaliphatische, mehrwertige Alkohole des Molekulargewichtsbereichs 62 - 350 verwendet.

8. Verwendung der Lackpolyisocyanate gemäß Anspruch 1 in Kombination mit organischen Polyhydroxylverbindungen unter Einhaltung eines Äquivalent-Verhältnisses von (i) blockierten Isocyanantgruppen der Lackpolyisocyanate zu (ii) der Summe aus in den Lackpolyisocyanaten gegebenenfalls vorhandenen Hydroxylgruppen und den Hydroxylgruppen der zugesetzten Polyhydroxylverbindungen von 2:1 bis 1:1,2 als Einbrennlack oder zur Herstellung eines Einbrernnlacks für beliebige hitzeresistene Substrate.

9. Verwendung der Lackpolyisocyante gemäß Anspruch 1 zur Herstellung von freie Hydroxylgruppen und gegebenenfalls blockierte Isocyanatgruppen aufweisenden Bindemittel oder Bindemittelkomponenten durch Umsetzung und/oder Abmischung mit organischen Polyhydroxylverbindungen e) in einem Äquivalentverhältnis von (i) blockierten Isocyanatgruppen der Lackpolyisocyanate zu (ii) der Summe aus Hydroxylgruppen der Komponente e) und gegebenenfalls in den Lackpolyisocyanaten bereits vorhandenen Hydroxylgruppen von 1:1,21 bis 1:3, wobei als Polyhydroxylverbindungen e) solche des Molekulargewichtsbereichs 62 bis 350 verwendet werden, die der Komponente d) entsprechen oder von dieser verschieden sind.
